## Europäisches Patentamt

## European Patent Office

## Office européen des brevets

(19)

(11) Veröffentlichungsnummer: **0 254 084**
**B1**

(12) **EUROPÄISCHE PATENTSCHRIFT**

(45) Veröffentlichungstag der Patentschrift:
07.02.90

(21) Anmeldenummer: 87109378.7

(22) Anmeldetag: 30.06.87

(51) Int. Cl.⁴: **B61F 5/14**, B61F 5/24,
B60G 17/04

(54) Niveaugeregelte, gasgefederte Wagenkastenabstützung für ein Schienenfahrzeug.

(30) Priorität: 23.07.86 DE 3624851

(43) Veröffentlichungstag der Anmeldung:
27.01.88 Patentblatt 88/4

(45) Bekanntmachung des Hinweises auf die Patenterteilung:
07.02.90 Patentblatt 90/6

(84) Benannte Vertragsstaaten:
FR GB SE

(56) Entgegenhaltungen:
CH-A- 587 142
DE-A- 1 455 101
US-A- 3 831 968

(73) Patentinhaber: Messerschmitt-Bölkow-Blohm
Gesellschaft mit beschränkter Haftung,
Robert-Koch-Strasse, D-8012 Ottobrunn(DE)

(72) Erfinder: Hofer, Franz, B. Benedicterstrasse 22,
D-8850 Donauwörth(DE)
Erfinder: Lang, Hans-Peter, Bernh.-Stockerstrasse 14,
D-8850 Donauwörth(DE)

**Beschreibung**

Die Erfindung bezieht sich auf eine gasgefederte Abstützung des Wagenkastens eines Schienenfahrzeugs auf einem Drehgestell gemäß dem Oberbegriff des Patentanspruchs 1.

Bei mit solchen z.B. durch die DE-A 1 455 101 bekannten Wagenkastenabstützungen ausgerüsteten Schienenfahrzeugen z.B. mit wiegenlosen Drehgestellen ist bei störungsfreier Funktion der Niveauregelung eine Ausdehnung der einzelnen Gasfeder über eine vorgegebene zulässige Federhöhe hinaus und infolgedessen ein Überschreiten der Fahrzeugumgrenzung (Lichtraumprofil) durch den Wagenkasten ausgeschlossen. Für den Störungsfall sind zwischen dem einzelnen Drehgestell und dem Wagenkasten zur Begrenzung seiner Winkelbewegungen Notanschläge angeordnet. Erfahrungsgemäß verlangen solche Notanschläge einen beträchtlichen baulichen Aufwand (Werkstoff und Form) und stehen folglich der Forderung nach einer Reduzierung des Leergewichts des Schienenfahrzeugs (Leichtbauweise) entgegen.

Der Erfindung liegt daher die Aufgabe zugrunde, auf diese bewegungsbegrenzenden Notanschläge zwischen dem Wagenkasten und Drehgestell bei einer gasgefederten Abstützung der eingangs genannten Art zu verzichten und eine alternative Sicherungsmaßnahme zu schaffen.

Diese Aufgabe ist gemäß dem Kennzeichen des Patentanspruchs 1 gelöst. Hiernach befindet sich ein gesondertes Ablaßventil je Gasfeder in einer von durch diese bewirkten vertikalen Abstandsänderungen zwischen dem Wagenkasten und Drehgestell abhängigen, erst im Gefahrenfall selbsttätig wirksamen Wirkverbindung entweder mit dem Drehgestell oder mit dem Wagenkasten, wobei durch die gekennzeichnete Bemessung des Ablaßströmungsquerschnitts in besonders einfacher Weise ein Verzicht auf jegliche Wirkverbindungsmittel mit der Niveauregelung der Gasfeder ermöglicht wird.

Außer der durch die Erfindung erzielten Steigerung der technischen Sicherheit einer Wagenkastenabstützung der eingangs genannten Art hat die Erfindung für sich noch den beträchtlichen Vorteil einer hohen Sicherheit vor betrieblichen Störungen oder einem Versagen, weil mit einer geringen Anzahl relativ einfacher und damit störungssicherer Bauelemente auszukommen ist. Dies verdeutlichen die in den Unteransprüchen gekennzeichneten bevorzugten Ausgestaltungen der Erfindung.

Nachfolgend wird die Erfindung anhand zweier Ausführungsbeispiele näher erläutert. Dazu zeigt die Zeichnung in

Fig. 1 einen Querschnitt (gemäß Schnittlinie I–I der Fig. 2) durch den Rahmen eines wiegenlosen Drehgestells unter einem hierauf luftgefederten Wagenkasten,

Fig. 2 eine Draufsicht gemäß Schnittlinie II–II der Fig. 1,

Fig. 3 eine (vergrößert dargestellte) Einzelheit der Fig. 1,

Fig. 4 die Wagenkastenabstützung gemäß Fig. 1 mit einer alternativen Ausführungsform der Erfindung.

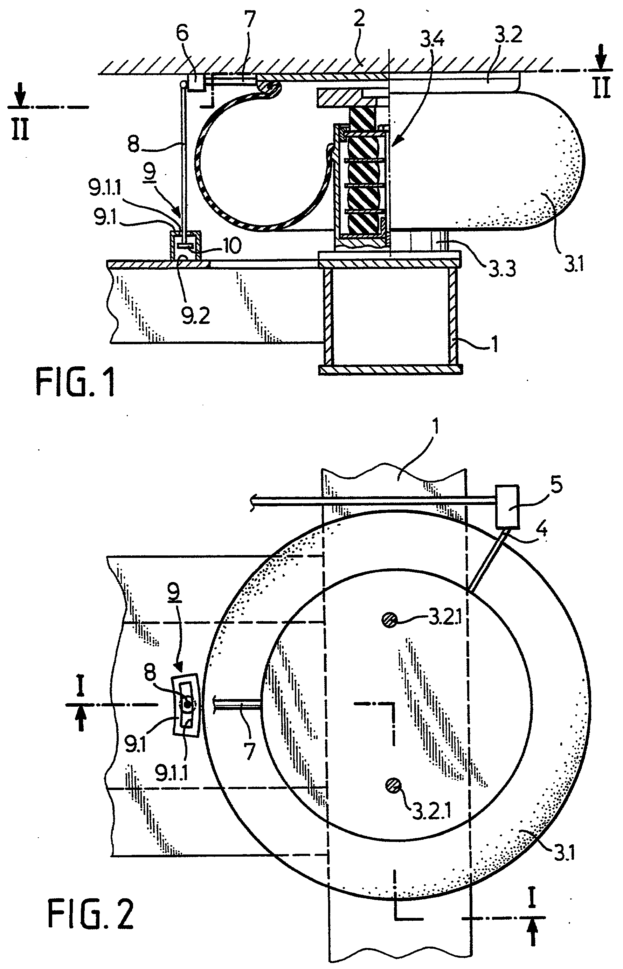

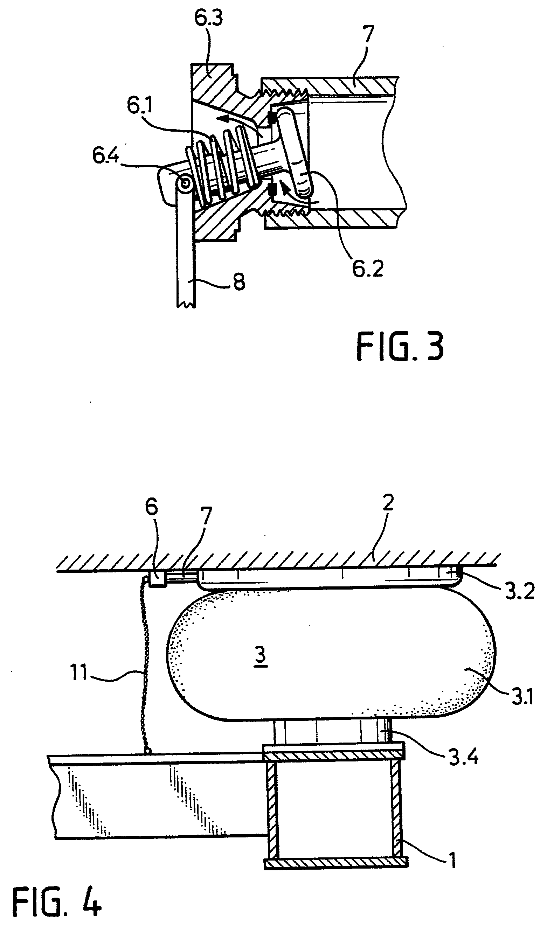

Bei einem Schienenfahrzeug erfolgt die Abstützung seines Wagenkastens je Drehgestell durch eine zwischen dessen Rahmen 1 und dem Untergestell 2 des Wagenkastens eingefügte Gasfeder 3, z.B. Luftfeder, deren halbtorusförmiger Balg 3.1 einerseits über eine Felge 3.2 mit Zapfen 3.2.1 derselben (Fig. 2) am Wagenkasten-Untergestell 2 und andererseits über einen zylindrischen Stützkörper 3.3 mit dem Drehgestell-Rahmen 1 verbunden ist. Der Luftdruck des Balges 3.1 ist gemäß Fig. 2 in an sich bekannter Weise über ein in eine Versorgungs-Druckleitung 4 geschaltetes Niveauregelventil 5, z.B. ein Dreiwegeventil, derart steuerbar, daß der dargestellte normale Abstand zwischen dem Drehgestell-Rahmen 1 und dem Wagenkasten-Untergestell 2 sich praktisch nicht ändert. Für den Gefahrenfall der Vergrößerung dieses Abstandes durch eine ununterbrochene Druckluftzufuhr in den Balg 3.1 infolge einer Störung der Niveauregelung stellt gemäß Fig. 1 ein zweites Ventil 6 sicher, daß ein maximal zulässiger Abstand bzw. eine entsprechende Federhöhe des Balges 3.1 nicht überschritten wird. Zu diesem Zweck der Federhöhenbegrenzung ist das u.a. wegen der günstigeren Anschlußmöglichkeit am Wagenkasten-Untergestell 2 stationierte Ventil 6 gemäß Fig. 3 nach Art eines Hubschalters ausgebildet und gemäß Fig. 1 in eine gesonderte Ablaßleitung 7 der Gasfeder 3 geschaltet. Diese Ablaßleitung 7 wird bei der dargestellten normalen Höhe des Balges 3.1 durch das Ablaßventil 6 verschlossen, wozu gemäß Fig. 3 eine Ventilfeder 6.1 einen Ventilteller 6.2 im Ventilgehäuse 6.3 in Schließstellung hält. Zum in Fig. 3 dargestellten Öffnen der Ablaßleitung 7 ist dieser Ventilteller 6.2 von seinem Sitz gegen die Wirkung der Ventilfeder 6.1 durch ein Zugmittel abhebbar, gemäß Fig. 1 vorzugsweise in Form einer zug- und druckbelastbaren Stange 8. Diese kommt nur und erst nach einem solchen Hub zur Wirkung, bei welchem die Gasfeder 3 durch Druckluftzufuhr die zulässige Federhöhe überschreitet. Dann wird nämlich die zwangsläufig axial bewegte Stange 8 blockiert, wozu deren freies Ende in ein am Drehgestell-Rahmen 1 sitzendes Gehäuse 9 eingeführt ist, dessen Deckfläche 9.1 als ein die Axialbeweglichkeit der Stange 8 begrenzender Anschlag für ein am Stangenende befestigtes tellerförmiges Sperrmittel 10 fungiert. Die Stange 8 ist folglich nur begrenzt axial freibeweglich und in diesen – durch das Gehäuse 9 nach Maßgabe bestimmter zulässiger Federhöheänderungen vorgegebenen – Grenzen gegenüber dem Ablaßventil 6 wirkungslos.

Selbstverständlich wäre ein Öffnen des Ablaßventils 6 infolge eines Stoßes der Stange 8 bzw. ihres Sperrmittels 10 gegen die Bodenfläche 9.2 des Gehäuses 9 unerwünscht. Deshalb ist der Abstand zwischen dem Sperrmittel 10 und der Bodenfläche 9.2 größer gewählt als die Wegsumme aus dem freien Vertikalfederweg der Gasfeder 3 und dem (relativ geringen) Federweg einer üblicherweise darin angeordneten Notfeder 3.4. Alternativ kann auch die Bodenfläche 9.2 eine das Anstoßen des Sperrmittels 10 ausschließende Aussparung aufweisen, d.h. die Stange 8 ist in Richtung des Rahmens 1 nicht blockierbar.

Damit schließlich das Öffnen des Ablaßventils 6 durch die Stange 8 eine weitere Zunahme der Federhöhe durch Druckluftzufuhr (der gestörten Niveauregelung) sicher verhindert, ist der durch das Ablaßventil 6 freigebbare Strömungsquerschnitt größer als der für die Speisung (Versorgung) der Gasfeder 3 bzw. des Balges 3.1 verfügbare Strömungsquerschnitt.

Gemäß Fig. 2 muß die Durchführungsöffnung für die Stange 8 in der Deckfläche 9.1 des Gehäuses 9 ein kurvenförmiger Schlitz 9.1.1 sein mit einem der Drehgestellausdrehung entsprechenden Radius. Damit (erst) ist sichergestellt, daß die bei größeren Drehgestell-Ausdrehwinkeln mit der vorbeschriebenen Ausführungsform des Ventil-Zugmittels bevorzugte Federhöhenbegrenzungseinrichtung die Relativbewegungen zwischen dem Wagenkasten und Drehgestell nicht beeinträchtigt. Hinsichtlich der Querbewegungen zwischen dem Drehgestell-Rahmen 1 und dem Wagenkasten-Untergestell 2 ist zweckmäßig gemäß Fig. 3 zwischen dem Ventilteller 6.2 und der Stange 8 eine Gelenkverbindung 6.4 vorgesehen, welche das Schwenken derselben horizontal quer gestattet.

Bei Drehgestellen mit kleineren Ausdrehwinkeln kann dagegen gemäß Fig. 4 das Zugmittel des Ablaßventils 6 auch ein bei normaler Federhöhe schlaffes Seil 11 o. dgl. sein, welches am Drehgestell-Rahmen 1 bloß befestigt ist. In diesem Fall ist das Seil 11 bis zu seiner Streckung als Zugmittel gegenüber dem Ablaßventil 6 bzw. dessen Ventilteller 6.2 wirkungslos und wird die Seilblockierung durch Streckung bewirkt mit der Folge des Abhebens des Ventiltellers 6.2 von seinem Sitz im Ventilgehäuse 6.3. Die maximale Länge des Seiles 11 wird selbstverständlich durch die zulässige Höhe der Gasfeder 3 bestimmt.

Schließlich ist noch hervorzuheben, daß beide vorbeschriebenen Ausführungsformen der erfindungsgemäßen Federhöhenbegrenzungseinrichtung nicht auf eine Positionierung des Ablaßventils 6 am Wagenkasten beschränkt sind. Letzteres kann also ebenso am Drehgestell-Rahmen sitzen, wobei dann das Ventil-Zugmittel durch wagenkastenseitige Blockiermittel zur Wirkung gebracht wird.

## Patentansprüche

1. Gasgefederte Abstützung des Wagenkastens eines Schienenfahrzeugs auf einem Drehgestell, wobei der Druck der einzelnen Gasfeder (3) über ein Niveauregelventil (5) steuerbar ist und der Gasfeder (3) über eine gesonderte Leitung (7) ein zweites am Wagenkasten oder Drehgestell sitzendes Ventil (6) nach Art eines Hubschalters zugeordnet ist, dessen die Leitung (7) verschließendes Ventilteil (6.2) im Ventilgehäuse (6.3) mittels eines in Wirkungsrichtung der Gasfeder (3) beweglichen Zugmittels (Stange 8; Seil 11) durch eine Blockierung desselben nach einem eine zulässige Gasfederhöhe überschreitenden Hub betätigbar ist, dadurch gekennzeichnet, daß das zweite Ventil (6) in der zum Ablassen des Druckes aus der Gasfeder (3) dienenden Leitung (7) ein Ablaßventil mit durch die Kraft einer Feder (6.1), in Schließstellung gehaltenem Ventilteller (6.2) ist, wobei der durch dieses Ablaßventil (6) freigebbare Strömungsquerschnitt größer ist als der für die Speisung der Gasfeder (3) verfügbare Strömungsquerschnitt.

2. Abstützung nach Anspruch 1, dadurch gekennzeichnet, daß das Ablaßventil (6) am Wagenkasten angeordnet ist.

3. Abstützung nach Anspruch 1, dadurch gekennzeichnet, daß das Zugmittel eine Stange (8) ist.

4. Abstützung nach Anspruch 1 und 3, dadurch gekennzeichnet, daß das freie Ende der Stange (8) in ein am Drehgestell bzw. Wagenkasten sitzendes Gehäuse (9) eingeführt ist, dessen Deckfläche (9.1) ein die Axialbeweglichkeit der Stange (8) begrenzender Anschlag ist für ein am Stangenende befestigtes Sperrmittel (10).

5. Abstützung nach Anspruch 4, dadurch gekennzeichnet, daß die Durchführungsöffnung für die Stange (8) in der Deckfläche (9.1) des Gehäuses (9) ein kurvenförmiger Schlitz (9.1.1) ist mit einem der Drehgestellausdrehung entsprechenden Radius.

6. Abstützung nach Anspruch 1, dadurch gekennzeichnet, daß das Zugmittel (Seil 11) andererseits am Drehgestell bzw. Wagenkasten befestigt und so biegeweich sowie von solcher Länge ist, daß es bei normaler Höhe der Gasfeder (3) ungestreckt und damit wirkungslos ist und daß die Blockierung des Zugmittels (Seil 11) durch seine Streckung bewirkt wird.

## Claims

1. A gas-buffered suspension of the carriage body of a rail bound vehicle, in which the pressure of the individual gas buffers (3) is controllable through a level control valve (5) and the gas buffer (3) is associated through a separate line (7) with a second valve (6) arranged on the carriage body or the bogie in the manner of a stroke operating device whose valve part (6.2) closing the line 7 in the valve housing (6.3) can be actuated by a traction means (rod 8; cable 11) in the working direction of the gas buffer by blocking of the same after a stroke exceeding the permissible buffer height, characterised in that the second valve (6) in the line (7) serving for relieving the pressure of the gas buffer (3) is an outlet valve with a valve disk held in the closed position by the force of a spring (6.1) wherein the flow cross-section liberated by this outlet valve (6) is greater than the flow cross-section available for the supply of the gas buffers (3).

2. A suspension according to Claim 1, characterised in that the outlet valve (6) is arranged on the carriage body.

3. A suspension according to Claim 1, characterised in that the traction means is a rod (8).

4. A suspension according to Claims 1 and 3, characterised in that the free end of the rod (8) is engaged in a housing (9) seated on the bogie or on the carriage the top surface (9.1) of which forms a stop for the axial movement of the rod (8) for a locking means (10) fast with the end of the rod.

5. A suspension according to Claim 4, characterised in that the ducting aperture for the rod (8) in the top surface (9.1) of the housing (9) is a curved slot (9.1.1) with a radius corresponding to the rotation of the bogie.

6. A suspension according to Claim 1, characterised in that the traction means (cable 11) is fastened at the other end to the bogie or the carriage body and is so flexible and is of such a length that at normal height of the gas buffer (3) it is unstretched and therefore inactive and that the blocking of the traction means (cable 11) is effected by its stretching.

## Revendications

1. Support à ressort pneumatique de la caisse de wagon d'un véhicule ferroviaire sur un bâti tournant, dans lequel la pression du ressort pneumatique (3) individuel est commandable par l'intermédiaire d'une soupape de régulation de niveau (5) et une deuxième soupape (6) se trouvant sur la caisse du wagon ou sur le bâti tournant, est associée, à la manière d'un ionterrupteur de course, au ressort pneumatique (3) par l'intermédiaire d'une conduite séparée (7), soupape dont la partie de soupape (6.2) située dans la cage de soupape (6.3) et obturant la conduite (7) est actionnable à l'aide d'un moyen de traction (tige 8, câble 11) mobile dans la direction d'action du ressort pneumatique (3), par un blocage de ce même moyen après une course dépassant une hauteur admissible du ressort pneumatique, caractérisé en ce que la deuxième soupape (6) située dans la conduite (7) servant à l'échappement de la pression hors du ressort pneumatique (3) est une soupape d'échappement comportant un plateau de soupape (6.2) maintenu en position de fermeture par la force d'un ressort (6.1), la section transversale d'écoulement libérable par cette soupape d'échappement (6) étant supérieure à la section transversale d'écoulement disponible pour l'alimentation du ressort pneumatique (3).

2. Support selon la revendication 1, caractérisé en ce que la soupape d'échappement (6) est disposé sur la caisse du wagon.

3. Support selon la revendication 1, caractérisé en ce que le moyen de traction est une tige (8).

4. Support selon les revendications 1 et 3, caractérisé en ce que l'extrémité libre de la tige (8) est introduite dans un boîtier (9) placé sur le bâti tournant ou la caisse de wagon, boîtier dont la plaque de couverture (9.1) est une butée, limitant la mobilité axiale de la tige (8), pour un moyen d'arrêt (10) fixé sur l'extrémité de la tige.

5. Support selon la revendication 4, caractérisé en ce que l'orifice de passage de la tige (8) dans la plaque de couverture (9.1) du boîtier (9) est une fente (9.1.1) de forme courbe, de rayon correspondant à l'alésage du bâti tournant.

6. Support selon la revendication 1, caractérisé en ce que le moyen de traction (câble 11) est fixé de l'autre côté sur le bâti tournant ou sur la caisse du wagon et qu'il est d'une flexibilité et d'une longueur telles qu'il n'est pas tendu pour une hauteur normale du ressort pneumatique (3) et demeure ainsi sans effet, et en ce que le blocage du moyen de traction (câble 11) est provoqué par son extension.

FIG.1

FIG.2

FIG. 3

FIG. 4